# NEUE EUROPÄISCHE PATENTSCHRIFT

(11) **EP 1 791 725 B2**
(45) Veröffentlichungstag und Bekanntmachung des Hinweises auf die Entscheidung über den Einspruch: **03.10.2012**
(45) Hinweis auf die Patenterteilung: 02.01.2008
(21) Anmeldenummer: 05802399.5
(22) Anmeldetag: 23.09.2005
(51) Int. Cl.: B60R 13/02, B60R 21/02, B29C 45/14

(54) **VERKLEIDUNGSTEIL MIT DEKOROBERFLÄCHE**
TRIM PANEL COMPRISING A DECORATIVE SURFACE
PIECE D'HABILLAGE COMPRENANT UNE SURFACE DECORATIVE

(30) Priorität: 23.09.2004 DE 102004047495
(43) Veröffentlichungstag der Anmeldung: 06.06.2007
(73) Patentinhaber: Faurecia Innenraum Systeme GmbH, 76767 Hagenbach (DE); Moldware Konstruktion Produktentwicklung Design GmbH, 66606 St. Wendel (DE)
(72) Erfinder: SCHULTE, Frank, 85053 Ingolstadt (DE); KLINK, Alexander, 66606 St. Wendel (DE)
(74) Vertreter: Golkowsky, Stefan
(86) Internationale Anmeldenummer: PCT/EP2005/010571
(87) Internationale Veröffentlichungsnummer: WO 2006/032540

(56) Entgegenhaltungen:
- DE-A1- 10 125 074
- DE-A1- 10 140 873
- DE-A1- 10 216 128
- DE-A1- 10 320 210
- DE-A1- 19 801 842
- DE-A1- 19 959 654
- DE-C2- 19 717 538
- DE-T2- 60 313 161
- DE-U1- 20 208 424
- DE-U1-202004 003 134
- US-A- 4 779 390
- US-A- 5 922 431

## Beschreibung

Die Erfindung betrifft ein Verkleidungsteil mit einer Dekoroberfläche, die in einem Teilbereich aus Leder gebildet ist, nach dem Oberbegriff des Hauptanspruchs. Die Erfindung betrifft ferner ein Verfahren zur Herstellung solcher Verkleidungsteile.

Ein gattungsgemäßes Verkleidungsteil, das insbesondere als Innenverkleidungsteil für ein Kraftfahrzeug verwendet werden kann, ist aus der DE 101 40 873 A1 bekannt. Ein weiteres bekanntes Innenverkleidungsteil weist einen flächigen Träger und an einer Sichtseite auf dem Träger mindestens eine weitere Schicht auf, wobei der Träger auch den Teilbereich überspannt. Ein solches Verkleidungsteil ist beispielsweise in der Druckschrift DE 101 25 074 A1 gezeigt. Bei diesem Verkleidungsteil sind nicht belederte Bereiche durch zusätzliche Komponenten mit eigenen Funktionen, wie beispielsweise eine Mittelkonsole mit Bedienelementen oder Luftaustrittöffnungen für ein Lüftungssystem gegeben.

Nicht bekannt ist es dagegen nach dem Stand der Technik, nur einzelne von mehreren Bereichen der Dekoroberfläche eines an sich einteiligen Verkleidungsteils bei Bedarf, also ausführungsabhängig, aus Leder, die anderen Bereiche aber aus einem anderen Dekormaterial auszuführen. Der vorliegenden Erfindung liegt die Aufgabe zugrunde, gerade ein solches Verkleidungsteil zu realisieren, das in diesem Sinne nur Bereichsweise beledert ist. Der Erfindung liegt ferner die Aufgabe zugrunde, ein Verfahren vorzuschlagen, mit dem unter möglichst geringem Aufwand einander entsprechende Verkleidungsteile sowohl in teilbelederten Ausführungen als auch in Ausführungen mit anderen und insbesondere einheitlichen Oberflächendekoren hergestellt werden können.

Diese Aufgabe wird erfindungsgemäß gelöst durch ein Verkleidungsteil mit den kennzeichnenden Merkmalen des Hauptanspruchs in Verbindung mit den Merkmalen des Oberbegriffs des Hauptanspruchs sowie durch ein Verfahren mit den Merkmalen des Anspruchs 10. Vorteilhafte Weiterentwicklungen und Ausgestaltungen der Erfindung ergeben sich mit den Merkmalen der Unteransprüche.

Realisiert wird das wunschgemäß teilbelederte Verkleidungsteil also dadurch, dass die auf dem Träger angeordnete weitere Schicht in dem beledert ausgeführten Teilbereich ausgespart ist, wobei in dem Teilbereich eine belederte, den Teilbereich abdeckende Blende auf der Sichtseite des Trägers angeordnet ist. Der Träger, der auch den Teilbereich überspannen soll, wird bei typischen Ausführungen der Erfindung aus einem beispielsweise polypropylenhaltigen Kunststoff und auch eventuell auch aus einem glasfaserverstärkten Kunststoff gefertigt und vorteilhafterweise als Spritzgussteil ausgeführt sein. Dabei soll der Träger auch dann noch als den Teilbereich überspannend zu bezeichnen sein, wenn er dort einzelne Öffnung, beispielsweise zum Befestigen der Blende, aufweist.

Ein besonderer Vorteil der Erfindung liegt darin, dass bei einer erfindungsgemäßen Ausführung teilbelederter Verkleidungsteile mit äußerst geringem Aufwand sowohl solche, teilweise belederten Verkleidungsteile als auch entsprechend geformte Verkleidungsteile mit einer den Teilbereich einschließend einheitlichen Dekoroberfläche (in der Regel dann nicht aus Leder) hergestellt werden können. Dieser Vorteil entfaltet dann sein Gewicht, wenn in einem Produktprogramm bezüglich ihrer Oberflächengestaltung unterschiedlich aufwendige, ansonsten aber gleichartige und austauschbare Verkleidungen vorgesehen sind. Ein typischer Fall ist ein Angebot eines Fahrzeugtyps mit unterschiedlich aufwendig gestalteten Innenräumen. Insbesondere können sowohl für die in beschriebener Weise teilbelederten Verkleidungsteile als auch für entsprechend geformte Verkleidungsteile mit anders gestalteter Oberfläche identisch ausgeführte Träger verwendet werden.

Ein in beschriebenem Sinn vorteilhaftes Verfahren, bei dem sowohl teilbelederte Verkleidungsteile beschriebener Art als auch entsprechend geformte Verkleidungsteile ohne belederte Blende hergestellt werden, kann dementsprechend vorsehen, dass identisch ausgeführte Träger verwendet werden, die in verschiedenen Schäumwerkzeugen ausführungsabhängig mit einer im Teilbereich ausgesparten oder aber mit einer nicht derart ausgesparten weiteren Schicht versehen werden. Die ausführungsabhängig verschiedenen Schäumwerkzeuge können dabei auch dadurch realisiert werden, dass nur ein einzelnes von mehreren Werkzeugteilen, beispielsweise eine Werkzeughälfte, ausgetauscht wird oder dass ein Hohlraum eines normalerweise für Verkleidungsteile mit einheitlicher Dekoroberfläche verwendeten Schäumwerkzeugs zur Herstellung eines Verkleidungsteils, das eine in beschriebener Weise belederte Blende aufweisen soll, durch einen Einsatz entsprechend verkleinert wird.

Die Ausführung des erfindungsgemäßen Verkleidungsteils sieht mit Blick auf eine möglichst einfache Herstellung vor, dass die belederte Blende auf den Träger aufgesetzt und allenfalls stellenweise fest mit diesem verbunden ist. Das Verkleidungsteil kann sogar so ausgeführt sein, dass die Blende reversibel auf- und absetzbar ist. Um einen sicheren Sitz der Blende auf dem Verkleidungsteil bzw. auf dem Träger zu gewährleisten, kann die Blende an das Verkleidungsteil angeschraubt, angeschweißt und/oder angenietet sein. Alternativ oder auch zusätzlich kann die Blende durch eine Klemmverbindung mit dem Verkleidungsteil bzw. dem Träger verbunden sein.

Ein besonders vorteilhaftes äußeres Erscheinungsbild des teilbelederten Verkleidungsteils ergibt sich, wenn eine Sichtoberfläche der Blende zumindest längs eines Teils des Randes des Teilbereichs bündig mit der Dekoroberfläche außerhalb des Teilbereichs abschließt. Das ist problemlos zu realisieren, da die auf dem Träger angeordnete weitere Schicht in dem Teilbereich ausgespart ist oder zumindest längs des Randes des Teilbereichs zum Teilbereich hin zurückspringt.

Bei besonders vorteilhaften weil aufwandsarm herstellbaren Ausführungen von Verkleidungsteilen entsprechender Art kann die mindestens eine weitere Schicht eine Schicht aus einem geschäumten Material, beispielsweise aus Polyurthanschaum, umfassen. Diese Schicht verbindet typischerweise den Träger mit einem außerhalb des Teilbereichs vorgesehenen Oberflächendekor. Bei diesem Oberflächendekor kann es sich beispielsweise um eine Gießhaut - typischerweise ebenfalls aus Polyurethan -, eine Sinterhaut, ein Gewebe, ein Gestrick oder ein Gewirke handeln, Materialien, die außerhalb des Teilbereichs die Dekoroberfläche bilden können. Im Fall einer Verwendung eines Gewebes, eines Gestricks, eines Gewirkes oder eines anderen porösen Materials kann es hilfreich sein, das Oberflächendekor mit einer dichtenden Folie zu hinterlegen.

Die Blende weist ein formgebendes, flächiges Substrat - also auch einen Träger - auf, über dem eine Lederschicht angeordnet ist. Auch dieses Substrat oder Trägerteil kann aus Kunststoff, beispielsweise zumindest teilweise aus Polypropylen, und eventuell glasfaserverstärkt, mit Blick auf eine einfache Herstellung möglichst als Spritzgussteil ausgeführt sein. Unter Umständen hat die Blende eine Geometrie, bei der eine einteilige Herstellung des Substrats als Spritzgussteil schwierig oder unmöglich ist. Wenn das der Fall ist, kann das Substrat auch mehrteilig hergestellt werden (zwei Teile dürften in der Regel genügen), wobei mehrere Teile des Substrats beispielsweise miteinander verschweißt werden können. Denkbar ist das beispielsweise für den Fall, dass es sich bei dem Verkleidungsteil um eine Instrumententafel oder einen Teil einer Instrumententafel handelt - ein typischer Anwendungsfall für die vorliegende Erfindung - wobei der Teilbereich durch eine beispielsweise Instrumentenanzeigen beherbergende Hutze definiert ist. Ausführungen, bei denen die belederte Blende eine Hutze bildet bzw. überdeckt, sind bevorzugt, weil eine solche Hutze typischerweise auf einer Instrumententafel einen Blickfang bildet, bei dem eine hochwertig wirkende Ausführung gut zur Geltung kommt.

Die Blende kann ferner so ausgeführt sein, dass zwischen dem Substrat und der Lederschicht zumindest stellenweise ein Abstandsgewirke und/oder eine Schaumschicht angeordnet ist, wodurch sich angenehme haptische Eigenschaften realisieren lassen. Die Verwendung eines Abstandsgewirkes, anstelle dessen beispielsweise auch Gewebebänder oder Matten zum Einsatz kommen können, ist besonders vorteilhaft, weil es eine zugfeste Verbindung zwischen Substrat und Lederschicht bzw. Lederbezug auch unter für Instrumententafeln typischen harten klimatischen Bedingungen gewährleistet. Zusätzlich oder alternativ kann es vorgesehen sein, dass das Substrat und/oder eine weitere zwischen Substrat und Leder angeordnete Schicht (z.B. eine Schaumschicht oder ein Abstandsgewirke) eine Aussparung aufweist, die einen rückseitig von der Lederschicht abstehenden Teil einer Naht der Lederschicht aufnimmt. Dadurch können verhältnismäßig einfach zu realisierende Stummelnähte zwischen Teilen der Lederschicht vorgesehen werden, ohne dass diese auf der Dekoroberfläche unangenehm auftragen würden. Außer derartigen Nahtgräben können auch andere Positionierhilfen für die Lederschicht auf bzw. in dem Substrat und/oder einer zusätzlichen Schicht vorgesehen sein.

Hinsichtlich der Logistik bei der Herstellung des Verkleidungsteils kann anstelle des gesamten Verkleidungsteils (beispielsweise einer Instrumententafel) ausschließlich die belederte Blende bei einem Zulieferunternehmen bezogen und anschließend als Beistellteil an ein Band geliefert werden. Das reduziert zum einen den logistischen Aufwand, zum anderen kann im Falle auftretender Mängel der Verursacher klar festgestellt werden.

Die Verwendung einer belederten Blende mit einem eigenen Substrat bzw. Trägerteil für den zu beledernden Teilbereich sind darin zu sehen, dass Kantenversteifungen mit gleich bleibender Radienqualität ledergerecht gestaltet werden können, dass der Aufwand bei der Bezugsherstellung gering gehalten werden kann, da Stummelnähte verarbeitet werden können, dass am Substrat bzw. Trägerteil der Blende Positionierhilfen wie beispielsweise Nahtgräben konstruktiv vorgesehen werden können und dass für das Substrat bzw. das Trägerteil der belederten Blende eine vom restlichen Verkleidungsteil unabhängige Materialauswahl getroffen werden kann, wobei ansonsten unverändert ein auch für andere Ausführungen des Verkleidungsteils einsetzbarer Träger verwendet werden kann. Zu berücksichtigen ist dabei, dass Materialien, die sich besonders gut beledern lassen, nicht unbedingt als Trägermaterialien für ausgesprochen großflächige Verkleidungsteile geeignet sind und umgekehrt, so dass für den Träger des Verkleidungsteils und das Substrat der Blende eventuell vorteilhafterweise verschiedene Materialien auszuwählen sind, was durch die vorliegende Erfindung ermöglicht wird. Gegenüber einer Belederung hinterschäumter Bauteile ergeben sich ferner weitere Vorteile dadurch, dass - außer bei sehr hoher Schaumhärte - bei letztgenannten in der Regel keine ausreichende Abstützung insbesondere an Kanten vorhanden ist, dass bei gewöhnlichen hinterschäumten Bauteilen ferner der Aufwand bei der Bezugherstellung hoch ist, da Nahtfahnen ausgeschärft und bereichsweise umgeklebt werden müssen, damit sie nicht an der Oberfläche auftragen, dass chemische Reaktionen eines Haut-Schaum-Verbundes negative Auswirkungen auf verwendete Klebstoffe haben können, wodurch es zu Ablösungserscheinungen des Leders kommen kann, und dass bei herkömmlichen belederten Bauteilen mangels trägerseitiger Positionierhilfen eine Positionierung des Leders und eventueller Nähte in aufwendiger Weise über Hilfswerkzeuge erfolgen muss. Zu nennen ist schließlich wieder der Vorteil der vorliegenden Erfindung, dass für die belederte Blende ein optimales Trägermaterial ausgewählt werden kann. Eine optimale Materialauswahl ist schließlich auch für Kleberschichten möglich, die zwischen dem Substrat und der Lederschicht, zwischen dem Substrat und einer weiteren Schicht wie beispielsweise einem Abstandsgewirke und/oder zwischen dieser weiteren Schicht und der Lederschicht vorgesehen sein können.

Ihrer Funktion entsprechend, und wie in den Materialien angedeutet, gewährleistet der den Teilbereich überdeckende Träger sowie das Substrat der Blende die mechanische Stabilität und die Form der jeweiligen Bauteile, d.h., Substrat und Träger sind entsprechend starr bzw. steif und haben eine ausreichende Dicke. Insbesondere durch die Verwendung eines starren, formgebenden Substrats als Bestandteil der Blende ist es nicht mehr notwendig, dass die Blende mit dem den Teilbereich überdeckenden Träger großflächig in Kontakt ist, um die notwendige mechanische Stabilität und die Erhaltung der Form zu sichern. Somit ist es möglich, Blenden mit unterschiedlichen Formen zu gestalten, bei denen auch Zwischenräume zwischen Träger und Substrat auftreten können, ohne dass die mechanische Stabilität des Bauteils leidet.

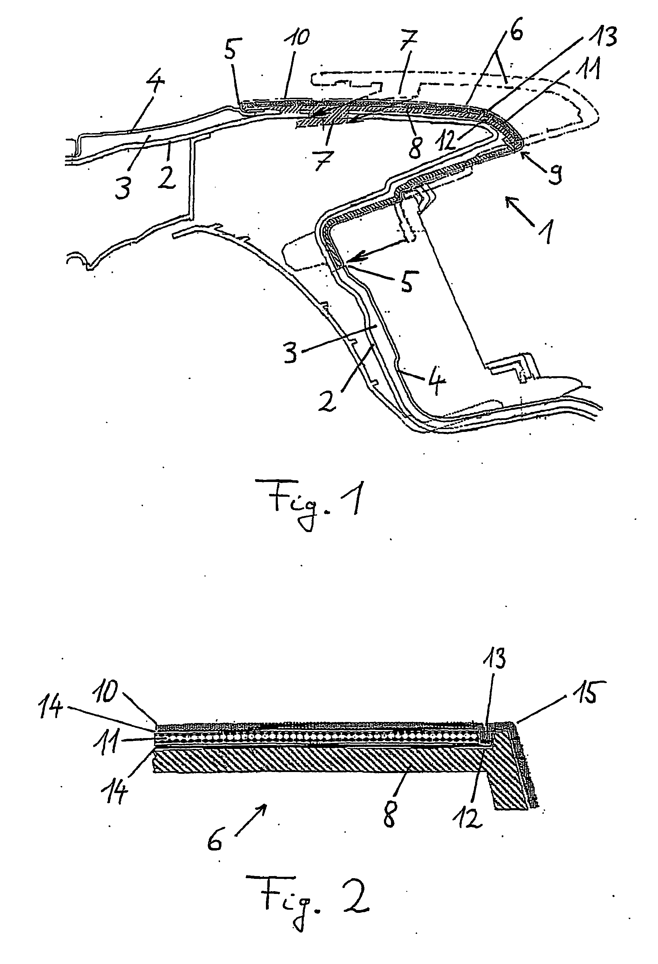

Ein Ausführungsbeispiel der vorliegenden Erfindung wird im folgenden anhand der Figuren 1 und 2 erläutert. Es zeigt
- Figur 1: einen Querschnitt durch ein erfindungsgemäßes Verkleidungsteil, das eine Instrumententafel bildet und
- Figur 2: ebenfalls als Querschnitt einen Teil einer zu diesem Verkleidungsteil gehörigen belederten Blende.

Dargestellt ist in der Figur 1 ein Querschnitt durch eine Instrumententafel für ein Kraftfahrzeug, die in einem Teilbereich 1 eine (zur Beherbergung von Instrumentenanzeigen vorgesehene) Hutze bildet. Die Instrumententafel weist einen flächigen, auch diesen Teilbereich 1 überspannenden Träger 2 aus einem polypropylenhaltigen, glasfaserverstärkten Kunststoff auf. Außerhalb des Teilbereichs 1 ist eine weitere Schicht 3 aus einem Polyurethanschaum auf dem Träger 2 angeordnet, welche den Träger 2 mit einer Gießhaut 4 verbindet, die außerhalb des Teilbereichs 1 eine Dekoroberfläche der Instrumententafel bildet. Diese Gießhaut 4 ist ebenfalls aus Polyurethan gebildet. In gleicher Weise kann anstelle der Gießhaut 4 auch eine Sinterhaut, ein Gewebe, ein Gestrick oder ein Gewirke als Dekoroberfläche außerhalb des Teilbereichs 1 vorgesehen sein, eventuell hinterlegt durch eine dichtende Folie.

Die Schicht 3 aus Polyurethanschaum ist innerhalb des Teilbereichs 1 ausgespart. In gleicher Weise wäre es möglich, die Schicht 3 so auszuführen, dass sie den Teilbereich 1 nicht vollständig ausspart, sondern lediglich längs eines Randes 5 des Teilbereichs 1 zum Teilbereich 1 hin zurückspringt. In dem Teilbereich 1 ist nun eine belederte, den Teilbereich 1 abdeckende Blende 6 auf der Sichtseite des Trägers 2 angeordnet. Diese Blende 6 ist auf den Träger 2 aufgesetzt und nur stellenweise fest mit diesem verbunden. Eine Verbindung der Blende 6 mit dem Träger 2 und damit mit der Instrumententafel kommt zunächst durch eine Klemmverbindung mittels eines rückseitig an die Blende 5 angeformten Hakens 7 zustande, der eine Öffnung im Träger 2 durchgreift und den Träger 2 dadurch hintergreift. Zusätzlich sind einige Schweißverbindungen zwischen der Blende 6 und dem Träger 2 vorgesehen. Zusätzlich oder alternativ könnte die Blende 6 auch an den Träger 2 angeschraubt und/oder angenietet sein. Auch ist es möglich, ausschließlich eine Klemmverbindung zwischen der Blende 6 und dem Träger 2 vorzusehen, so dass die Blende 6 reversibel auf- und absetzbar ist. Die Blende 6, die in der Figur 1 sowohl in einer montierten Position als auch (gestrichelt) in einer Position vor dem Aufsetzen abgebildet ist, ist so bemessen, dass eine aus Leder gebildete Sichtoberfläche der Blende 6 zumindest längs eines Teils des Randes 5 des Teilbereichs 1 bündig mit der durch die Gießhaut 4 gebildeten Dekoroberfläche außerhalb des Teilbereichs 1 abschließt.

Die Blende 6 weist als formgebendes Substrat 8 ein flächiges Trägerteil aus einem spritzgegossenen Kunststoff auf. Bei dem Kunststoff kann es sich dabei z.B. um PC/ABS oder einen anderen höherwertigen Kunststoff handeln. Geometriebedingt ist dieses Trägerteil aus zwei einzeln spritzgeformten Teilen zusammengesetzt, die in einem Kantenbereich 9 miteinander verschweißt sind. Oberhalb des Substrats 8 ist eine mit diesem verklebte Lederschicht 10 angeordnet, die innerhalb des Teilbereichs 1 die Dekoroberfläche der Instrumententafel bildet, wobei stellenweise zwischen der Lederschicht 10 und dem Substrat 8 ein Abstandsgewirke 11 angeordnet ist, das der Instrumententafel im Bereich der durch die Blende 6 gebildeten bzw. bedeckten Hutze angenehme haptische Eigenschaften verleiht. Anstelle des Abstandsgewirkes 11 könnten auch eine Schaumschicht oder andere Gewebebänder oder Matten vorgesehen sein. Schließlich sind stellenweise längliche Aussparungen 12 in das Substrat 8 eingeformt, die als Nahtgräben dienen und jeweils einen rückseitig von der Lederschicht 10 abstehenden Teil einer Naht 13 der Lederschicht 10 aufnehmen.

Ein Ausschnitt der Blende 6 aus Figur 1 ist in Figur 2 abgebildet. Erkennbar ist dort wieder das Substrat 8 und die Lederschicht 10 sowie das stellenweise zwischen dem Substrat 8 und der Lederschicht 10 angeordnete Abstandsgewirke 11. Das Abstandsgewirke 11 endet dabei an einer Stelle, an der die Lederschicht 10 eine Naht 13 aufweist, die als Stummelnaht ausgeführt ist. Ein rückseitig von der Lederschicht 10 abstehender Teil dieser Naht 13 kommt dabei in einer Aussparung 12 zu liegen, die durch eine entsprechende Formung des Substrats 8 von diesem und einem Rand des Abstandsgewirkes 11 gebildet wird. Sowohl zwischen dem Abstandsgewirke 11 und dem Substrat 8 als auch zwischen dem Abstandsgewirke 11 und der Lederschicht 10 ist jeweils eine Klebstoffschicht 14 vorgesehen. An anderen Stellen ist die Lederschicht 10 direkt auf das Substrat 8 aufgeklebt. An einer Kante 15 der Blende 6 ist das Substrat 8 schließlich so geformt, dass es eine präzise Kantengeometrie vorgibt.

Der Träger 2 ist bei dem erläuterten Ausführungsbeispiel so gestaltet, dass er unverändert auch für anders ausgeführte Instrumententafeln gleicher Form verwendet werden kann, bei denen der Teilbereich 1 nicht abweichend von anderen Bereichen beledert sein soll. Dazu ist es vorgesehen, einen identisch ausgeführten Träger 2 in einem anderen Schäumwerkzeug weiter zu verarbeiten, so dass der Teilbereich 1 abweichend vom hier gezeigten Ausführungsbeispiel nicht ausgespart wird, wobei die Hutze eine mit Bereichen außerhalb des Teilbereichs 1 identische Dekoroberfläche erhält. Dadurch können mit äußerst geringem Aufwand Instrumententafeln gleicher Form, die zum Einbau in Fahrzeuge gleichen Fahrzeugtyps vorgesehen sind, in verschiedenen Ausführungen - mit oder ohne Belederung im Teilbereich 1 - bei einer Verwendung weitestmöglich identischer Komponenten hergestellt werden. Dabei werden lediglich verschiedene Schäumwerkzeuge verwendet, eventuell sogar nur verschiedene Werkzeugteile (beispielsweise durch Auswechseln nur einer Werkzeughälfte) für ein ansonsten identisches Schäumwerkzeug. Auch ist es möglich, ein einziges Schäumwerkzeug zu verwenden, in das zur Herstellung einer Instrumententafel mit einer belederten Blende 6 ein Einsatz eingebracht wird, der einen Hohlraum des Schäumwerkzeugs verkleinert, um einen für die Blende 6 benötigten Platz vorzuhalten.

## Patentansprüche

1. Verkleidungsteil mit einer Dekoroberfläche, die in einem Teilbereich (1) aus Leder gebildet ist, wobei das Verkleidungsteil einen flächigen, auch den Teilbereich (1) überspannenden Träger (2) und an einer Sichtseite auf dem Träger (2) mindestens eine weitere Schicht (3) aufweist, wobei die genannte Schicht (3) in dem Teilbereich (1) ausgespart ist, wobei in dem Teilbereich (1) eine belederte, den Teilbereich (1) abdeckende Blende (6) auf der Sichtseite des Trägers (2) angeordnet ist, wobei die Blende (6) ein formgebendes, flächiges Substrat (8) aufweist, über dem eine Lederschicht (10) angeordnet ist, und wobei die Blende (6) fest mit dem Träger (2) verbunden ist, **dadurch gekennzeichnet, dass** die Blende (6) auf der Sichtseite des Trägers (2) aufgesetzt ist und die Blende (6) nur stellenweise fest mit dem Träger (2) verbunden ist.

2. Verkleidungsteil nach Anspruch 1, **dadurch gekennzeichnet, dass** eine Sichtoberfläche der Blende (6) zumindest längs eines Teils des Randes (5) des Teilbereichs (1) bündig mit der Dekoroberfläche außerhalb des Teilbereichs (1) abschließt.

3. Verkleidungsteil nach einem der Ansprüche 1 bis 2, **dadurch gekennzeichnet, dass** die Blende (6) an das Verkleidungsteil angeschraubt, angeschweißt und/oder angenietet ist und/oder durch eine Klemmverbindung mit diesem verbunden ist.

4. Verkleidungsteil nach einem der Ansprüche 1 bis 3, **dadurch gekennzeichnet, dass** die mindestens eine weitere Schicht (3) eine Schicht (3) aus einem geschäumten Material umfasst.

5. Verkleidungsteil nach einem der Ansprüche 1 bis 4, **dadurch gekennzeichnet, dass** die Dekoroberfläche außerhalb des Teilbereichs (1) durch eine Gießhaut (4), eine Sinterhaut, ein Gewebe, ein Gestrick oder ein Gewirke gebildet ist.

6. Verkleidungsteil nach einem der Ansprüche 1 bis 5, **dadurch gekennzeichnet, dass** zwischen dem Substrat (8) und der Lederschicht (10) zumindest stellenweise ein Abstandsgewirke (11) und/oder eine Schaumschicht angeordnet ist.

7. Verkleidungsteil nach einem der Ansprüche 1 bis 6, **dadurch gekennzeichnet, dass** das Substrat (8) eine Aussparung (12) aufweist, die einen rückseitig von der Lederschicht (10) abstehenden Teil einer Naht (13) der Lederschicht (10) aufnimmt.

8. Verkleidungsteil nach einem der Ansprüche 1 bis 7, **dadurch gekennzeichnet, dass** es eine Instrumententafel oder ein Teil einer Instrumententafel ist.

9. Verkleidungsteil nach Anspruch 8, **dadurch gekennzeichnet, dass** der Teilbereich (1) durch eine Hutze definiert ist.

10. Verfahren, bei dem Verkleidungsteile nach einem der Ansprüche 1 bis 9 hergestellt werden, **dadurch gekennzeichnet, dass** in dem Verfahren zusätzlich entsprechend geformte Verkleidungsteile ohne belederte Blende (6) hergestellt werden, wobei jeweils identisch ausgeführte Träger (2) verwendet werden, die in verschiedenen Schäumwerkzeugen ausführungsabhängig mit einer im Teilbereich (1) ausgesparten oder nicht ausgesparten weiteren Schicht (3) versehen werden.

## Claims

1. Trim panel with a decorative surface formed from leather in a part section (1), whereby the trim panel comprises a spatial support (2) covering the part section (1), and on a visible side of the support (2) at least one further layer (3), whereby the said layer (3) is recessed in the part section (1), whereby a leather covered trim (6) covering the part section (1) is located on the visible side of the support (2) of the part section (1) whereby the trim (6) comprises a shaping, spatial substrate (8), over which a leather layer (10) is located, and whereby the trim (6) is firmly connected with the support (2), **characterised in that** a trim (6) is positioned on the visible side of the support (2) and the trim (6) is firmly connected with the support (2) only in places.

2. Trim panel according to Claim 1, **characterised in that** a visible surface of the trim (6) finishes flush with the decorative surface outside of the part section (1) at least along a part of the edge (5) of the part section (1).

3. Trim panel according to one of the Claims 1 or 2, **characterised in that** the trim (6) is screwed, welded and/or riveted to the trim panel and/or connected with the same by means of a clamping connection.

4. Trim panel according to one of the Claims 1 to 3, **characterised in that** the at least one further layer (3) comprises a layer (3) made from a foam material.

5. Trim panel according to one of the Claims 1 to 4, **characterised in that** the decorative surface is formed by a cast skin (4), a sintered skin, a mesh, a web, or a net outside of the part section (1).

6. Trim panel according to one of the Claims 1 to 5, **characterised in that** a distancing net (11) and/or a foam layer is located at least in places between the substrate (8) and the leather layer (10).

7. Trim panel according to one of the Claims 1 to 6, **characterised in that** the substrate (8) comprises a recess (12) receiving a part of a seam (13) of the leather layer (10) projecting at the rear of said leather layer (10).

8. Trim panel according to one of the Claims 1 to 7, **characterised in that** the same consists of an instrument panel or a part of an instrument panel.

9. Trim panel according to Claim 8, **characterised in that** the part section (1) is defined by a vent.

10. Method for producing trim panels according to one of the Claims 1 to 9, **characterised in that** correspondingly shaped trim panels without leather covered trims (6) are also produced according to the method whereby identical supports (2) are used for each, which are equipped with a further recessed or non-recessed layer (3) in the part section (1) in various embodiments of foam tools.

## Revendications

1. Pièce d'habillage comportant une surface décorative, qui est réalisée en cuir dans une zone partielle (1), dans laquelle la pièce d'habillage présente un support (2) plan, traversant également la zone partielle (1), et comporte au moins une couche supplémentaire (3) sur une face visible sur le support (2), dans laquelle la couche (3) mentionnée est évidée dans la zone partielle (1), dans laquelle, dans la zone partielle (1), sur la face visible du support (2), est disposé un cache (6) recouvrant la zone partielle (1), garni de cuir, dans laquelle le cache (6) présente un substrat (8) plan et conformé, sur lequel est disposée une couche en cuir (10), dans laquelle le cache (6) est relié fermement au support (2), **caractérisée en ce que** le cache (6) est posé sur la face visible du support (2) et le cache (6) est seulement localement relié fermement au support (2).

2. Pièce d'habillage selon la revendication 1, **caractérisée en ce qu'**une surface visible du cache (6) affleure par rapport à la surface décorative en dehors de la zone partielle (1), au moins le long d'une partie du bord (5) de la zone partielle (1).

3. Pièce d'habillage selon la revendication 1 ou 2, **caractérisée en ce que** le cache (6) est vissé, soudé et/ou riveté sur la pièce d'habillage et/ou relié à celle-ci grâce à une jonction par serrage.

4. Pièce d'habillage selon l'une quelconque des revendications 1 à 3, **caractérisée en ce que** la au moins une couche supplémentaire (3) comporte une couche (3) constituée d'une matière moussée.

5. Pièce d'habillage selon l'une quelconque des revendications 1 à 4, **caractérisée en ce que** la surface décorative est formée en dehors de la zone partielle (1) par une peau de moulage (4), une peau de frittage, un tissu, un tricot ou un maillage.

6. Pièce d'habillage selon l'une quelconque des revendications 1 à 5, **caractérisée en ce que**, entre le substrat (8) et la couche de cuir (10) est disposé au moins localement un maillage d'écartement (11) et/ou une couche de mousse.

7. Pièce d'habillage selon l'une quelconque des revendications 1 à 6, **caractérisée en ce que** le substrat (8) présente un évidement (12), qui reçoit une partie, dépassant vers l'arrière de la couche de cuir (10), d'un fil (13) de la couche de cuir (10).

8. Pièce d'habillage selon l'une quelconque des revendications 1 à 7, **caractérisée en ce qu'**il s'agit d'un tableau de bord d'instrument ou d'une partie d'un tableau de bord d'instrument.

9. Pièce d'habillage selon la revendication 8, **caractérisée en ce que** la zone partielle (1) est définie par une buse.

10. Procédé grâce auquel des pièces d'habillage selon l'une quelconque des revendications 1 à 9 sont fabriquées, **caractérisé en ce que**, dans le procédé, en outre, on fabrique des pièces d'habillage formées de manière correspondante sans cache (6) garni de cuir, dans lequel on utilise des supports (2) respectivement réalisés de manière identique qui sont dotés, dans différents dispositifs de moussage, en fonction du mode de réalisation, d'une couche supplémentaire (3) évidée ou non évidée dans la zone partielle (1).
